# EUROPEAN PATENT SPECIFICATION

(11) **EP 3 406 119 B1**
(45) Date of publication and mention of the grant of the patent: **14.01.2026**
(21) Application number: 17741120.4
(22) Date of filing: 22.01.2017
(51) Int. Cl.: A01D 34/00, B62D 55/06, B62D 55/14

(54) **SELF-MOVING DEVICE AND METHOD FOR CONTROLLING SELF-MOVING DEVICE**
SELBSTBEWEGENDE VORRICHTUNG UND VERFAHREN ZUR STEUERUNG DER SELBSTBEWEGENDEN VORRICHTUNG
DISPOSITIF AUTOMOTEUR ET PROCÉDÉ DE COMMANDE D'UN DISPOSITIF AUTOMOTEUR

(30) Priority: 21.01.2016 CN 201610039085; 19.07.2016 CN 201610569231; 11.11.2016 CN 201610997080
(43) Date of publication of application: 28.11.2018
(73) Proprietor: Positec Power Tools (Suzhou) Co., Ltd, Suzhou, Jiangsu 215123 (CN)
(72) Inventor: DU, Jiang, Suzhou Jiangsu 215123 (CN); GAO, Zhendong, Suzhou Jiangsu 215123 (CN)
(74) Representative: Kilburn & Strode LLP
(86) International application number: PCT/CN2017/072098
(87) International publication number: WO 2017/125089

(56) References cited:
- EP-A1- 2 465 757
- WO-A1-2006/128284
- WO-A1-99/21749
- WO-A2-2008/073203
- CN-A- 1 962 342
- CN-A- 102 696 294
- CN-Y- 201 398 293
- GB-A- 2 230 414
- JP-A- 2012 064 152
- US-B1- 9 096 281

## Description

### BACKGROUND

### Technical Field

The present invention relates to the technical field of power tools, and in particular to a self-moving device and a control method for a self-moving device.

### Related Art

The mower adopts a track as a walking mechanism, and the track type walking mechanism comprises a drive wheel, a guide wheel and a track coating the drive wheel and the guide wheel. Usually, the track between the drive wheel and the guide wheel of such track type walking mechanism is grounded. The track type walking mechanism has the following defects: 1, the track easily abrades grass and damages the lawn when turns with a smaller turning radius; 2, the minimal turning radius is larger, and the trafficability is poorer; and 3 the torque during turning is larger.

### SUMMARY

It is necessary to provide a self-moving device, which has smaller damage to the lawn during turning and better trafficability. It is further necessary to provide a control method for a self-moving device.

Aspects of an invention are set out in independent claims 1 and 4.

A self-moving device is disclosed, comprising: a housing; and a movement module, mounted to the housing, wherein the movement module comprises a track, driven by a drive motor to drive the self-moving device to move; the self-moving device further comprises a control module and an adjusting device, the control module being configured to control the adjusting device to adjust a grounding length of the track, such that the grounding length of the track when the self-moving device turns is smaller than that of the track when the self-moving device moves straightly.

Since the grounding length of a track is smaller during turning, the contact area between the track and a lawn is smaller, the damage to the lawn can be reduced, the minimal turning radius of the self-moving device can be further reduced, the trafficability of the machine is improved, and meanwhile, the drive force of a motor can be reduced. Such a self-moving device is known e.g. from document WO 2008/073203 A2.

In the present self-moving device, the adjusting device comprises a support structure, mounted to the housing; the control module being configured to control the support structure to extend out from the bottom of the housing or withdraw into the housing; before controlling the self-moving device to turn, the control module being configured to control the support structure to extend out from the bottom of the housing, to support at least part of the track away from a working plane; and after controlling the self-moving device to finish the turning, the control module being configured to control the support structure to withdraw into the housing.

The self-moving device is simple and reasonable in structural design, before the self-moving device turns, the support structure can extend out of the housing to support the self-moving device away from the lawn, and the contact friction between the track and the lawn can be reduced, to further reduce the abrasion of the track to the lawn. After the turning is finished, the support structure is withdrawn into the housing, the self-moving device then continues to operate, the work capacity of the self-moving device is not affected, the working effect of the self-moving device is ensured, and the use is convenient.

### BRIEF DESCRIPTION OF THE DRAWING

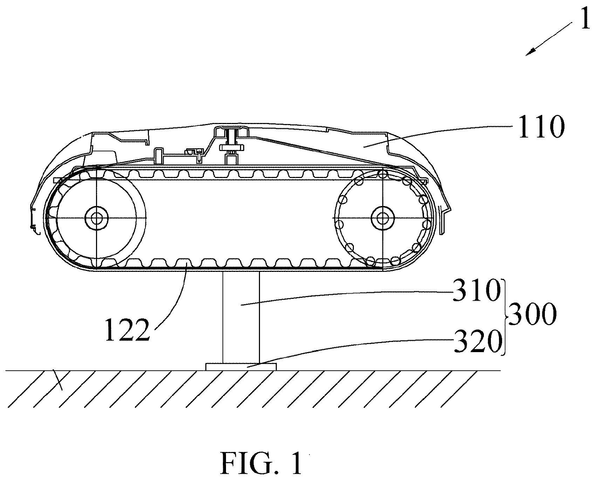

Fig. 1 is a schematic diagram when a self-moving device turns according to an embodiment of the present invention.

### DETAILED DESCRIPTION

In order to conveniently understand the present invention, the present invention will be described more comprehensively with reference to related drawing. The drawing gives a preferred embodiment of the present invention. However, the present invention can be implemented by many different forms, and is not limited to the embodiments described in the text. On the contrary, these embodiments are provided to make the disclosed content of the present invention clearer and more comprehensive to understand.

It should be noted that when the element is called to be "fixed" on the other element, it can be directly on the other element or another element can exist between the two elements. When one element is considered to be "connected" to the other element, it can be directly connected to the other element or another element possibly exists between the two elements.

Unless otherwise defined, all technical and scientific terms used in the text are same as those generally understood by those skilled in the art of the present invention. The terms used in the description of the present invention are merely intended for describing the specific embodiments rather than limiting the present invention. The term "and/or" used in the text comprises any and all combination of one or more related listed objects.

Firstly, it should be noted that a track type self-moving device is adaptive to severe environments and is thus widely applied to heavy machinery such as an excavator, a crane and a tank, and is also suitable for a mower to adapt to fluctuated lawns. For the heavy machinery such as the excavator, the crane and the tank, due to the larger load, in order to ensure the stability of the machinery, a grounding length is increased as much as possible generally, and there is no correlated research on the requirements on the track type self-moving device in the power tools with a small load, such as the mower, in the industry yet.

Referring to Fig. 1, in an embodiment of the present invention, an autonomous mower 1 comprises a support structure 300, mounted to a housing 110. By the support structure 300, there is certain distance between the bottom of the housing 110 and a lawn. In this way, when the autonomous mower 1 turns, due to the above distance, a track 122 makes no contact with the lawn, and the abrasion to the lawn caused by the track 122 is avoided.

Meanwhile, the support structure 300 can extend out relative to the housing 110 or be withdrawn into the housing 110. In other words, the support structure 300 can perform telescopic motion. The support structure 300 works only when the autonomous mower 1 needs to turn, and at this point, the support structure 300 extends out of the housing 110. When the autonomous mower 1 needs no turning or after the turning is finished, the support structure 300 is withdrawn into the housing 110. In this way, the support structure 300 is prevented from generating interference to the trimming operation of the autonomous mower 1, the support structure 300 will not make contact with the lawn while the autonomous mower 1 is enabled to trim the lawn, stable operation of the autonomous mower 1 is ensured, the trimming effect of the autonomous mower 1 is ensured, and the use is convenient.

The support structure 300 can extend out from the bottom of the housing 110 relative to the housing 110, to support the track 122 or part of the track 122 away from the lawn. It should be noted that after the support structure 300 extends out from the bottom of the housing 110, the support structure 300 can support the track 122 away from the lawn. In this way, the autonomous mower 1 can turn to avoid the contact between the track 122 and the lawn. When the autonomous mower 1 turns, the housing 110 rotates around the support structure 300, and after the turning is finished, the support structure 300 is withdrawn into the housing 110. Specifically, before the autonomous mower 1 needs to turn, the support structure 300 extends out from the bottom of the housing 110, at this point, there is space between the bottom of the housing 110 and the lawn, such that the track 122 makes no contact with the lawn, and the damage of the track 122 to the lawn when the autonomous mower 1 turns is avoided. When the autonomous mower 1 is rotated to a required position, the support structure 300 is withdrawn into the housing 110, at this point, the autonomous mower 1 can continue to trim the lawn. The turning of the autonomous mower 1 is realized based only on the contact between the support structure 300 and the lawn, in this way, the contact between the track 122 and the lawn can be avoided, so that the damage of the track 122 to the lawn when the autonomous mower 1 turns is avoided. Of course, after the support structure 300 supports the track 122 away from the lawn, other operations except the turning can also be performed.

It should be noted that the rotary motion of the autonomous mower 1 is performed around the support structure 300, the support structure 300 will not be driven to rotate therewith, no friction is generated between the support structure 300 and the lawn, and the lawn is not damaged. Of course, the housing 110 can also drive the support structure 300 to rotate therewith, since the contact area between the support structure 300 and the lawn is obviously smaller than that between the track 122 and the lawn. Therefore, the damage to the lawn is small.

In the present embodiment, the control module and the support structure 300 are connected by a drive structure. The control module controls the drive structure to drive the support structure 300 to extend out or withdraw. When the autonomous mower 1 needs to turn, the control module controls the drive structure to drive the support structure 300 to extend out of the bottom of the housing 110, such that the support structure 300 supports the housing 110. After the turning of the autonomous mower 1 is finished, the control module controls the drive structure to drive the support structure 300 to withdraw into the housing 110.

The control module is further connected to a turning mechanism, and the control module controls the turning mechanism to drive the housing 110 to automatically rotate. The control module can control the turning mechanism to cause the housing 110 to rotate for a required angle. Besides, the turning mechanism can further ensure no interference between the turning of the housing 110 and the support structure 300, and ensures the turning stability of the housing 110. The turning mechanism comprises a bearing, mounted on the support structure 300. When the turning mechanism controls the housing 110 to rotate, the bearing can cause the support structure 300 to not be interfered with other parts of the turning mechanism, thereby ensuring the turning stability of the housing.

Further, the autonomous mower 1 further comprises a height sensor, and the height sensor is electrically connected to the control module. The control module can control the height sensor to detect the height of a trimmed object in the lawn, to control an extending length of the support structure 300. In the an embodiment, the control module can control the height sensor to detect an actual height of the grass on the lawn, the height sensor transmits an actual height signal of the grass to the control module, and then the control module controls the drive structure to drive the support structure 300 to extend for a required length, to avoid the contact between the track 122 and the lawn. Of course, in other embodiments of the present invention, the control module can also control the support structure 300 to extend for a fixed length, for example, the support structure 300 extends for the fixed length of 60mm-80mm, to achieve the purpose of avoiding the contact between the track 122 and the lawn.

Further, the extending length of the support structure 300 is larger than or equal to the height of the trimmed object. In other words, the extending length of the support structure 300 should be larger than or equal to the height of the grass on the lawn. After the support structure 300 extends out of the housing 110, the housing 110 can be supported, such that the distance between the track 122 and the lawn is larger than or equal to the height of the grass, in this way, when the housing 110 turns, the track 122 will not make contact with the grass in the lawn, and the damage to the lawn is further avoided.

Further, after the support structure 300 is withdrawn into the housing 110, the end part of the support structure 300 is flush with the bottom of the housing 110. That is to say, after the support structure 300 is withdrawn into the housing 110, the end part of the support structure 300 and the bottom of the housing 110 are in the same plane. In this way, when the autonomous mower 1 performs the trimming operation, the support structure 300 will not generate influence on the lawn. Meanwhile, the support structure 300 is not required to be withdrawn into the housing 110, the moving distance of the support structure 300 is reduced, and the efficiency is improved.

As an embodiment, the support structure 300 is located in the center of gravity of the autonomous mower 1. After the support structure 300 supports the housing 110 up, the support structure 300 will bear all weight of the autonomous mower 1. In order to avoid a deviated falling phenomenon when the housing 110 turns and ensure stable rotation of the autonomous mower 1, the support structure 300 should be located in the position of the center of gravity of the autonomous mower 1, thereby ensuring that the housing 100 can be kept balanced after the support structure 300 supports the housing 110.

As an embodiment, the support structure 300 comprises a support rod 310, and the control module can control the support rod 310 to extend out relative to the housing 110 or withdraw into the housing 110. In the present embodiment, the housing 110 is supported by the support rod 310, and the control module controls the support rod 310 to extend out or withdraw. Besides, a sectional shape of the support rod 310 can be polygonal, circular or oval.

Of course, the amount of the support rods can also be at least two, and the sectional sizes of the at least two support rods 310 are changed in sequence; the axes of the at least two support rods 310 are coincided and disposed by sleeving; and the control module controls the at least two support rods 310 to extend out in sequence or withdraw in sequence. In other words, the extending length of the support structure 300 is at least twice of the length of the support rods 310. In this way, the length range of the support rods 310 can be increased, such that the housing 110 according to embodiments of the present invention can be supported to any height.

When the amount of the support rods 310 is at least two, the sectional sizes of the support rods 310 are gradually increased, the support rod 310 with the maximal sectional size is located on the outermost side, and the support rod 310 with the minimal sectional size is located on the innermost side. The support rods 310 are arranged from outside to inside according to the sectional sizes of the support rods 310 from large to small.

Further, the support structure 300 further comprises a support chassis 320, and the chassis 320 is disposed on one end of the support rod 310 away from the housing 110. The support rod 310 makes contact with the lawn by the chassis 320. After the support structure 300 supports the housing 110, the support structure 300 bears all weight of the autonomous mower 1. If only the support rod 310 supports the housing 110, one end of the support rod 310 away from the housing 110 may be sunken into the lawn and the lawn is easy to damage. The chassis 320 can increase the contact area between the support rod 310 and the lawn, concentration of the weight of the housing 110 is avoided, the support effect of the support structure 300 is ensured, the support structure 300 is prevented from being sunken into the lawn and the damage to the lawn is avoided.

Further, the sectional area of the chassis 320 is 1.2-5 times of the sectional area of the support rod 310. The contact area between the support structure 300 and the lawn is increased by the chassis 320, thereby being convenient for the support structure 300 to support the housing 110. If the sectional area of the chassis 320 is too small, the support effect of the chassis 320 is nearly same as that of the support rod 310. If the sectional area of the chassis 320 is too large, the trimming operation of the housing 110 is affected, and meanwhile, the size of the housing 110 is also increased. The height of the chassis 320 is 0.15-0.6 times of the sectional area of the support rod 310, so as to be convenient for the support structure 300 to extend out and withdraw.

Besides, the chassis 320 can also be a hollowed structure, i.e., there is a hollow where the chassis 320 and the lawn contacts. That is to say, the contact area between the chassis 320 and the lawn is smaller than the area of the chassis 320. In this way, the contact area between the chassis 320 and the lawn can be reduced, the damage to the lawn is avoided, and the influence on the lawn is reduced.

As an embodiment, the support structure 300 is a cylinder, the cylinder comprises a cylinder block and a telescopic rod extending out or withdrawing relative to the cylinder block. The cylinder block is mounted in the housing 110 and the telescopic rod can extend out or withdraw relative to the housing 110. The housing 110 can also be supported by the cylinder, it is convenient for the turning operation of the housing 110, and further the abrasion to the lawn is avoided.

The drive structure can be a gear transmission structure and can also be a pump. When the support structure 300 is the support rod 310, the support structure 300 can be driven by a gear transmission structure and the like to extend out and withdraw. When the support structure 300 is the cylinder, the telescopic rod can be driven by the pump to extend out and withdraw. Of course, the drive structure can also be other structures capable of driving the support structure 300 to extend out and withdraw.

The foregoing embodiments merely express several embodiments of the present invention, the description is relatively specific and detailed, but cannot be understood as a limitation to the scope of the present invention patent. It should be pointed out that those ordinary skilled in the art can make several transformations and improvements without departing from the concept of the present invention, as defined by the appended claims.

## Claims

1. A self-moving device, comprising:
a housing (110); and
a movement module , mounted to the housing (110), wherein the movement module comprises a track (122) , driven by a drive motor to drive the self-moving device to move; the self-moving device further comprises a control module and an adjusting device , the control module being configured to control the adjusting device to adjust a grounding length of the track (122), such that the grounding length of the track (122) when the self-moving device turns is smaller than that of the track (122) when the self-moving device moves straightly,
**characterized in that** the adjusting device comprises a support structure (300), mounted to the housing (110);
the control module being configured to control the support structure (300) to extend out from the bottom of the housing (110) or withdraw into the housing (110);
before controlling the self-moving device to turn, the control module being configured to control the support structure (300) to extend out from the bottom of the housing (110), to support at least part of the track (122) away from a working plane; and
if judging that the turning of the self-moving device is finished, the control module being configured to control the support structure (300) to withdraw into the housing (110).

2. The self-moving device according to claim 1, wherein the self-moving device is an autonomous mower.

3. The self-moving device according to claim 1, wherein the grounding length of the track (122) is zero when the support structure (300) extends out from the bottom of the housing (110), or wherein the self-moving device comprises a turning mechanism, rotatably connected to the housing (110) and the support structure (300), when the support structure (300) extends out from the bottom of the housing (110), the control module controls the turning mechanism to drive the housing (110) to rotate around the support structure (300), to cause the self-moving device to turn.

4. A control method for a self-moving device, wherein the self-moving device comprises a housing (110); and a movement module , mounted to the housing (110); the movement module comprises a track (122), driven by a drive motor to drive the self-moving device to move; the control method for a self-moving device comprises the steps:
controlling to reduce a grounding length of the track (122) before the self-moving device is controlled to turn; and
controlling to increase a grounding length of the track (122) after the self-moving device is controlled to finish the turning,
**characterized in that** the self-moving device comprises a support structure (300), mounted to the housing (110); and the control method for a self-moving device comprises the steps:
controlling the support structure (300) to extend out from the bottom of the housing (110) before the self-moving device is controlled to turn, to support at least part of the track (122) away from a working plane; and
controlling the support structure (300) to withdraw into the housing (110) after the self-moving device is controlled to finish the turning.

## Patentansprüche

1. Selbstfahrende Vorrichtung, umfassend:
ein Gehäuse (110) und
ein an dem Gehäuse (110) montiertes Bewegungsmodul, wobei das Bewegungsmodul eine Raupe (122) umfasst, die von einem Antriebsmotor angetrieben wird, um die selbstfahrende Vorrichtung zur Bewegung anzutreiben, wobei die selbstfahrende Vorrichtung ferner ein Steuermodul und eine Einstellvorrichtung umfasst, wobei das Steuermodul dazu ausgestaltet ist, die Einstellvorrichtung dahingehend zu steuern, eine Bodenberührungslänge der Raupe (122) so einzustellen, dass die Bodenberührungslänge der Raupe (122), wenn die selbstfahrende Vorrichtung wendet, kleiner als die der Raupe (122) ist, wenn sich die selbstfahrende Vorrichtung gerade bewegt,
**dadurch gekennzeichnet, dass** die Einstellvorrichtung eine Stützstruktur (300) umfasst, die an dem Gehäuse (110) montiert ist,
wobei das Steuermodul dazu ausgestaltet ist, die Stützstruktur (300) so zu steuern, dass sie sich von dem Boden des Gehäuses (110) heraus erstreckt oder sich in das Gehäuse (110) zurückzieht,
wobei das Steuermodul dazu ausgestaltet ist, die Stützstruktur (300), bevor die selbstfahrende Vorrichtung zum Wenden gesteuert wird, so zu steuern, dass sie sich von dem Boden des Gehäuses (110) heraus erstreckt, um mindestens einen Teil der Raupe (122) von einer Arbeitsebene weg zu stützen, und
das Steuermodul dazu ausgestaltet ist, die Stützstruktur (300) so zu steuern, dass sie sich in das Gehäuse (110) zurückzuzieht, wenn beurteilt wird, dass das Wenden der selbstfahrenden Vorrichtung beendet ist.

2. Selbstfahrende Vorrichtung nach Anspruch 1, wobei die selbstfahrende Vorrichtung ein autonomer Mäher ist.

3. Selbstfahrende Vorrichtung nach Anspruch 1, wobei die Bodenberührungslänge der Raupe (122) null ist, wenn sich die Stützstruktur (300) von dem Boden des Gehäuses (110) heraus erstreckt, oder wobei die selbstfahrende Vorrichtung einen Wendemechanismus umfasst, der mit dem Gehäuse (110) und der Stützstruktur (300) drehverbunden ist, wenn sich die Stützstruktur (300) von dem Boden des Gehäuses (110) heraus erstreckt, wobei das Steuermodul den Wendemechanismus dahingehend steuert, das Gehäuse (110) anzutreiben, so dass es sich um die Stützstruktur (300) dreht, um die selbstfahrende Vorrichtung zum Wenden zu veranlassen.

4. Steuerverfahren für eine selbstfahrende Vorrichtung, wobei die selbstfahrende Vorrichtung ein Gehäuse (110) und ein an dem Gehäuse (110) montiertes Bewegungsmodul umfasst, wobei das Bewegungsmodul eine Raupe (122) umfasst, die von einem Antriebsmotor angetrieben wird, um die selbstfahrende Vorrichtung zur Bewegung anzutreiben, wobei das Steuerverfahren für eine selbstfahrende Vorrichtung folgende Schritte umfasst:
Steuern zur Reduzierung einer Bodenberührungslänge der Raupe (122), bevor die selbstfahrende Vorrichtung zum Wenden gesteuert wird, und
Steuern zur Vergrößerung einer Bodenberührungslänge der Raupe (122), nachdem die selbstfahrende Vorrichtung zur Beendigung des Wendens gesteuert worden ist,
**dadurch gekennzeichnet, dass** die selbstfahrende Vorrichtung eine an dem Gehäuse (110) montierte Stützstruktur (300) umfasst und das Steuerverfahren für eine selbstfahrende Vorrichtung die folgenden Schritte umfasst:
Steuern der Stützstruktur (300), dass sie sich von dem Boden des Gehäuses (110) heraus erstreckt, bevor die selbstfahrende Vorrichtung zum Wenden gesteuert wird, um mindestens einen Teil der Raupe (122) von einer Arbeitsebene weg zu stützen, und
Steuern der Stützstruktur (300), so dass sie sich in das Gehäuse (110) zurückzieht, nachdem die selbstfahrende Vorrichtung zur Beendigung des Wendens gesteuert wird.

## Revendications

1. Dispositif automoteur, comprenant :
une enveloppe (110) ; et
un module de déplacement, monté sur l'enveloppe (110), le module de déplacement comprenant une chenille (122), entraînée par un moteur d'entraînement pour entraîner un déplacement du dispositif automoteur ; le dispositif automoteur comprenant en outre un module de commande et un dispositif de réglage, le module de commande étant configuré pour commander le dispositif de réglage pour régler une longueur de contact avec le sol de la chenille (122), de sorte que la longueur de contact avec le sol de la chenille (122) lorsque le dispositif automoteur tourne soit plus petite que celle de la chenille (122) lorsque le dispositif automoteur se déplace en ligne droite,
**caractérisé en ce que** le dispositif de réglage comprend une structure de support (300), montée sur l'enveloppe (110) ;
le module de commande étant configuré pour commander la structure de support (300) de façon à ce qu'elle s'étende depuis la partie inférieure de l'enveloppe (110) ou se rétracte dans l'enveloppe (110) ;
le module de commande étant configuré, avant de commander le dispositif automoteur de façon à ce qu'il tourne, pour commander la structure de support (300) de façon à ce qu'elle s'étende depuis la partie inférieure de l'enveloppe (110), afin de supporter au moins une partie de la chenille (122) à distance d'un plan de travail ; et
le module de commande étant configuré, s'il juge que le dispositif automoteur a fini de tourner, pour commander la structure de support (300) de façon à ce qu'elle se rétracte dans l'enveloppe (110).

2. Dispositif automoteur selon la revendication 1, le dispositif automoteur étant une tondeuse autonome.

3. Dispositif automoteur selon la revendication 1, dans lequel la longueur de contact avec le sol de la chenille (122) est nulle lorsque la structure de support (300) s'étend depuis la partie inférieure de l'enveloppe (110), ou le dispositif automoteur comprenant un mécanisme de rotation, relié à rotation à l'enveloppe (110) et à la structure de support (300), le module de commande, lorsque la structure de support (300) s'étend depuis la partie inférieure de l'enveloppe (110), commandant le mécanisme de rotation pour amener l'enveloppe (110) à tourner autour de la structure de support (300), afin de faire tourner le dispositif automoteur.

4. Procédé de commande d'un dispositif automoteur, dans lequel le dispositif automoteur comprend une enveloppe (110) ; et un module de déplacement, monté sur l'enveloppe (110) ; le module de déplacement comprenant une chenille (122), entraînée par un moteur d'entraînement pour entraîner un déplacement du dispositif automoteur ; le procédé de commande d'un dispositif automoteur comprenant les étapes suivantes :
commander pour réduire une longueur de contact avec le sol de la chenille (122) avant que le dispositif automoteur ne soit commandé de façon à ce qu'il tourne ; et
commander pour augmenter une longueur de contact avec le sol de la chenille (122) après que le dispositif automoteur a été commandé de façon à ce qu'il finisse de tourner,
**caractérisé en ce que** le dispositif automoteur comprend une structure de support (300), montée sur l'enveloppe (110) ; et le procédé de commande d'un dispositif automoteur comprend les étapes suivantes :
commander la structure de support (300) de façon à ce qu'elle s'étende depuis la partie inférieure de l'enveloppe (110) avant que le dispositif automoteur ne soit commandé de façon à ce qu'il tourne, afin de supporter au moins une partie de la chenille (122) à distance d'un plan de travail ; et
commander la structure de support (300) de façon à ce qu'elle se rétracte dans l'enveloppe (110) après que le dispositif automoteur a été commandé de façon à ce qu'il finisse de tourner.
